# EUROPEAN PATENT APPLICATION

(11) **EP 4 818 749 A1**
(43) Date of publication of application: **07.10.2026**
(21) Application number: 24897058.4
(22) Date of filing: 25.09.2024
(51) Int. Cl.: G01S 7/4865, G01C 3/06, G01S 7/497

(54) **DISTANCE MEASURING DEVICE AND DISTANCE MEASURING METHOD**

(30) Priority: 30.11.2023 JP 2023202863
(71) Applicant: PANASONIC INTELLECTUAL PROPERTY MANAGEMENT CO., LTD., Kadoma-shi, Osaka 571-0057 (JP)
(72) Inventor: SUENAGA Kiyoyuki, Kadoma-shi, Osaka 571-0057 (JP); KASHIWABARA Yoshiro, Kadoma-shi, Osaka 571-0057 (JP); SHIIHARA Masahiro, Kadoma-shi, Osaka 571-0057 (JP)
(74) Representative: SSM Sandmair
(86) International application number: PCT/JP2024/034102
(87) International publication number: WO 2025/115368

(57) **Abstract**

This distance measuring device comprises: a light emitting element that projects projected light; a light receiving element that receives reflected light resulting from the projected light being reflected by an object, and that generates a light reception signal on the basis of the reflected light; and a controller. The controller: derives a measured distance value by measuring the distance from the distance measuring device to the object on the basis of the time from when the projected light was projected until the signal level of the light reception signal becomes equal to or higher than a predetermined level; acquires associated information in which a plurality of measured distance values and a plurality of actual distance values are associated with one another; and if a measured distance value is equal to or less than a threshold value, corrects the measured distance value on the basis of the associated information.

## Description

### TECHNICAL FIELD

The present disclosure relates to a distance measurement device and a distance measurement method.

### BACKGROUND ART

In the related art, a distance measurement device that measures a distance using a pulse wave is known. As one of distance measurement devices, there is known a distance measurement device including a transmission unit that transmits a pulse wave, a reception unit that receives a reflected wave generated by the pulse wave being reflected by a target, a time measurement unit that measures a required time from when the pulse wave is transmitted by the transmission unit to when the reflected wave is detected by the reception unit, a pulse width measurement unit that takes in a reception waveform of the reflected wave output by the reception unit and measures a pulse width of the reception waveform, a correction value calculation unit that takes in the pulse width measured by the pulse width measurement unit and calculates a correction value of the required time corresponding to the pulse width based on input/output characteristics of an active region and a saturated region in the reception unit, and a distance calculation unit that corrects the required time measured by the time measurement unit using the correction value calculated by the correction value calculation unit and calculates a distance to the target by multiplying a propagation speed of the pulse wave (see Patent Literature 1).

### CITATION LIST

### PATENT LITERATURE

Patent Literature 1: JPH08-179032A

### SUMMARY OF INVENTION

### TECHNICAL PROBLEM

When noise such as stray light is present in the distance measurement device of Patent Literature 1, an error in distance to a target may occur, and in this case, distance measurement accuracy decreases.

The present disclosure provides a distance measurement device and a distance measurement method capable of performing distance measurement while reducing an error in a distance to an object even when noise such as stray light is present.

### SOLUTION TO PROBLEM

An aspect of the present disclosure is a distance measurement device including: a light emitting element configured to project projection light; a light receiving element configured to receive reflection light of the projection light reflected by an object and generate a light reception signal based on the reflection light; and a controller configured to perform processing based on the light reception signal, in which the controller derives a measurement distance value by measuring a distance to the object based on a time from projection of the projection light until a signal level of the light reception signal is equal to or higher than a predetermined level, acquires association information in which a plurality of measurement distance values and a plurality of actual distance values corresponding to the plurality of measurement distance values are associated with one another, and corrects the derived measurement distance value based on the association information when the derived measurement distance value is equal to or lower than a predetermined threshold.

An aspect of the present disclosure is a distance measurement method including: projecting projection light; receiving reflection light of the projection light reflected by an object and generating a light reception signal based on the reflection light; deriving a measurement distance value by measuring a distance to the object based on a time from projection of the projection light until a signal level of the light reception signal is equal to or higher than a predetermined level; acquiring association information in which a plurality of measurement distance values and a plurality of actual distance values corresponding to the plurality of measurement distance values are associated with one another; and correcting the derived measurement distance value based on the association information when the derived measurement distance value is equal to or lower than a predetermined threshold.

### ADVANTAGEOUS EFFECTS OF INVENTION

According to the present disclosure, it is possible to perform distance measurement while reducing an error in a distance to an object even when noise such as stray light is present.

### BRIEF DESCRIPTION OF DRAWINGS

FIG. 1 is an external perspective view of a distance measurement device according to a first embodiment of the present disclosure.
FIG. 2 is a longitudinal cross-sectional view of the distance measurement device illustrated in FIG. 1.
FIG. 3 is a block diagram illustrating a functional configuration example of the distance measurement device.
FIG. 4 is a diagram illustrating a detailed configuration example of a correction unit.
FIG. 5 is a diagram illustrating an arrangement example of mapping points based on pre-measurement distance values and actual distance values on a two-dimensional plane.
FIG. 6A is a diagram illustrating a first example of an approximate expression approximated to pass through each mapping point on a two-dimensional plane.
FIG. 6B is a diagram illustrating a second example of an approximate expression approximated to pass through each mapping point on a two-dimensional plane.
FIG. 7A is a diagram illustrating a first example of a relation between a measurement distance value and a corrected distance value.
FIG. 7B is a diagram illustrating a second example of the relation between the measurement distance value and the corrected distance value.
FIG. 8 is a diagram illustrating an example of a relation between the corrected distance value and a measurement error.
FIG. 9 is a diagram illustrating a first example of an output of a light reception signal (or signal obtained by amplifying light reception signal) (amplifier output) and an output of a comparator.
FIG. 10 is a diagram illustrating a second example of the amplifier output and the output of the comparator.
FIG. 11 is a diagram illustrating a relation between the measurement distance value and an actual distance to an object.
FIG. 12 is a diagram illustrating a relation between the measurement distance value and the measurement error.

### DESCRIPTION OF EMBODIMENTS

Hereinafter, an embodiment will be described in detail with reference to the drawings as appropriate. However, unnecessarily detailed description may be omitted. For example, detailed description of well-known matters and description of substantially the same configuration may be omitted. This is to avoid unnecessary redundancy of the following description and to facilitate understanding of those skilled in the art. It should be noted that the accompanying drawings and the following description are provided for those skilled in the art to fully understand the present disclosure, and are not intended to limit the subject matter described in the claims.

### (Circumstances Leading to Obtaining Embodiment According to Present Disclosure)

It is assumed that the distance measurement device of Patent Literature 1 emits laser light and receives reflection light from an object to optically measure a distance. The distance measurement device of Patent Literature 1 measures (calculates) a distance value from the distance measurement device to an object by measuring a time from generation of a START signal obtained by emitting laser light to generation of a STOP signal obtained by detecting reflection light, and further corrects and outputs the distance value by a pulse width of a light reception signal. In the distance measurement device of Patent Literature 1, a stray light component may be mixed as noise in a signal processed by a light receiving circuit immediately after light emission (light reception signal) due to influence of stray light existing inside the distance measurement device when laser light is emitted. As will be described later, other noise may also be mixed.

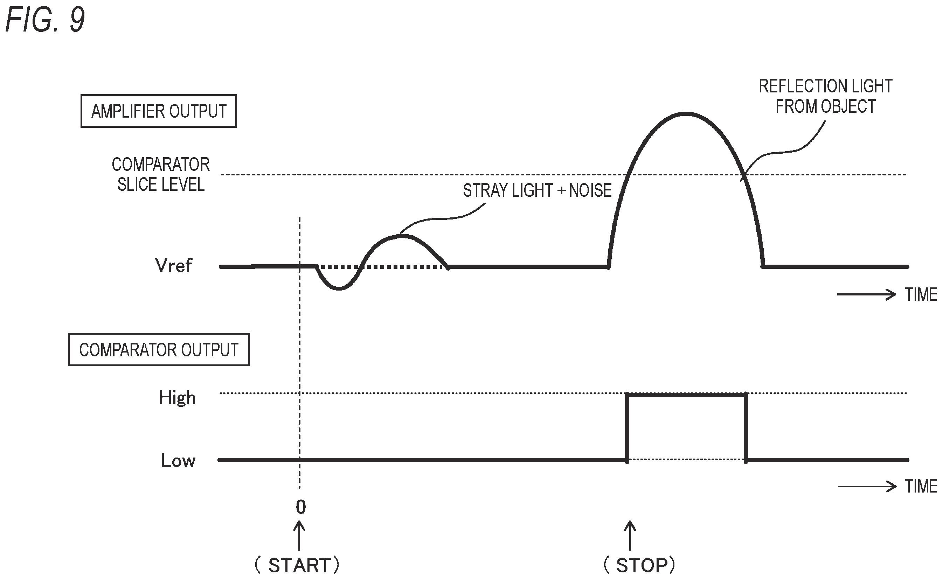

FIG. 9 is a diagram illustrating a first example of an output of a light reception signal (or signal obtained by amplifying light reception signal) (amplifier output) and an output of a comparator. It can be seen that stray light and noise are likely to be detected earlier than reflection light from an object. In a case where a stray light component or other noise is mixed into the light reception signal as noise, when a timing at which the reflection light from an object is detected does not overlap the noise of the stray light, the measured distance value (measurement distance value) is not affected.

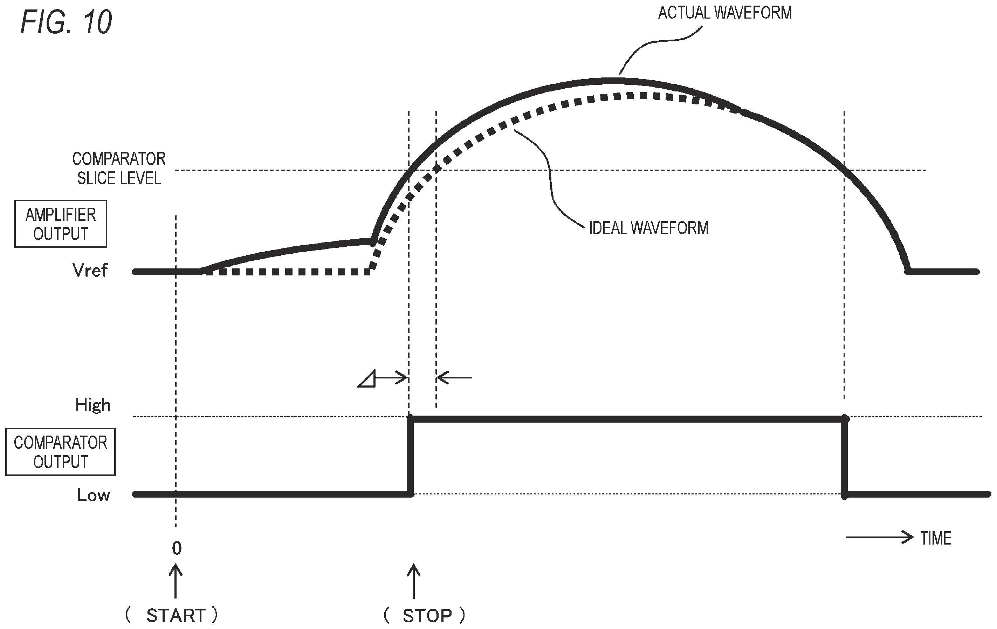

FIG. 10 is a diagram illustrating a second example of the amplifier output and the output of the comparator. When an object is near the distance measurement device, stray light and other noise are superimposed as noise on reflection light from the object, and a light reception amount changes (increases or decreases) as compared with a state where there is no stray light. Therefore, a timing at which a level of the light reception signal based on the light reception amount is a slice level of the comparator is shifted by Δtime with respect to an ideal waveform that is not affected by stray light or other noise.

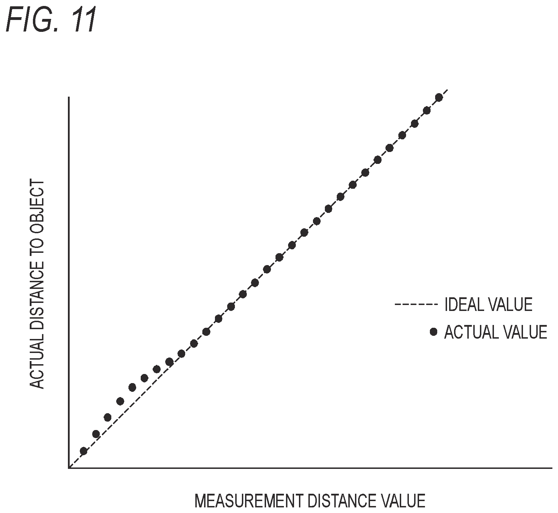

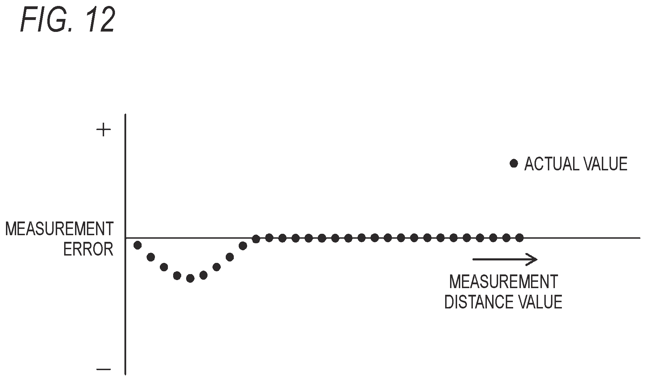

FIG. 11 is a diagram illustrating a relation between the measurement distance value and an actual distance to an object. FIG. 12 is a diagram illustrating a relation between the measurement distance value and a measurement error. In the distance measurement device of Patent Literature 1, an error (measurement error) may occur in the measurement distance value due to a deviation in generation timing of the STOP signal caused by such a stray light component or other noise. That is, a deviation occurs between the measurement distance value and the actual distance. In the example of FIG. 10, distance measurement is performed assuming that an object is present closer than an actual object.

Further, when the distance measurement device emits laser light, a large current flows inside the device at the time of laser light emission, which may cause induction noise. The induction noise includes, for example, electrical or magnetic noise. This is because a large current flows when a light emitting element emits laser light. Electrical or magnetic noise may be mixed into the light reception signal as a signal component (see FIG. 9). In this case, the measurement distance value is affected, similarly to stray light.

In the following embodiment, a distance measurement device and a distance measurement method capable of performing distance measurement while reducing an error in a distance to an object even when noise such as stray light is present will be described.

### (Embodiment)

### <Physical Configuration of Distance Measurement Device>

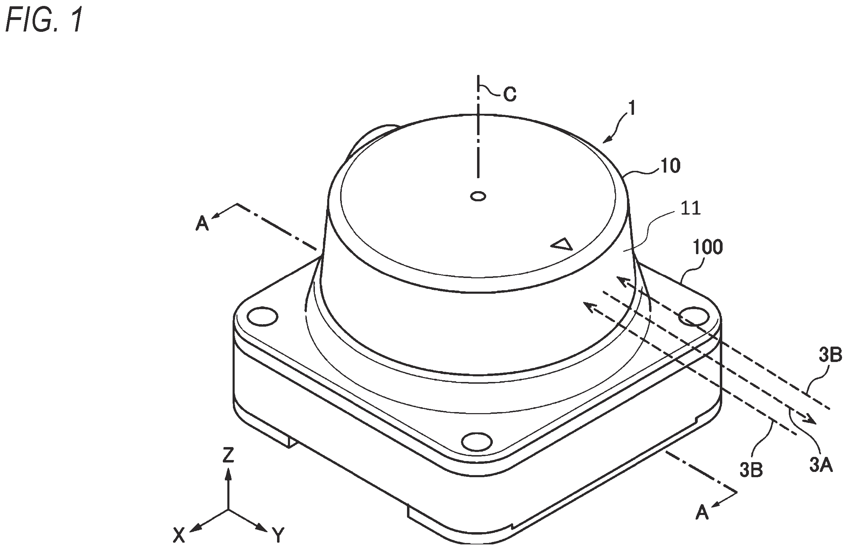

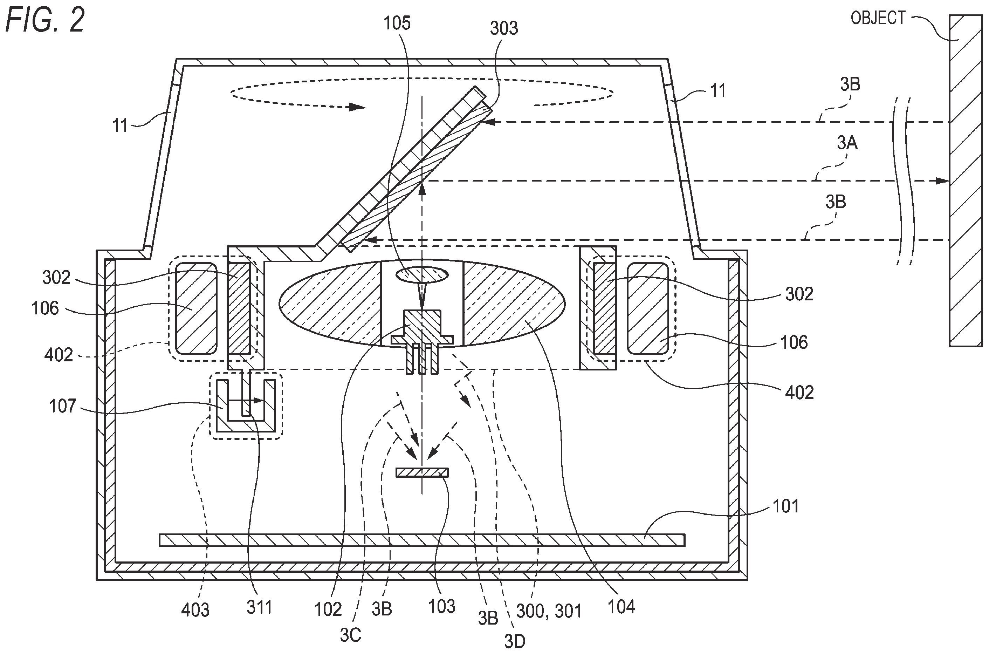

FIG. 1 is an external perspective view of a distance measurement device 1 according to a first embodiment. FIG. 2 is a longitudinal cross-sectional view of the distance measurement device 1 according to the first embodiment. FIG. 2 corresponds to an A-A cross-sectional view of the distance measurement device 1 illustrated in FIG. 1.

The distance measurement device 1 is, for example, a light detection and ranging (LiDAR) device. The distance measurement device 1 optically measures a distance to an object to be measured using light such as laser light. The distance measurement device 1 performs two-dimensional scanning using light in a scanner system, and performs object detection and distance measurement.

As illustrated in FIGS. 1 and 2, the distance measurement device 1 includes a fixed part 100, a rotation part 300, and an outer cover 10.

The fixed part 100 has a substantially rectangular parallelepiped shape. The rotation part 300 is connected to an upper surface of the fixed part 100 and has a cylindrical shape that rotates about an axis perpendicular to the upper surface as a rotation axis C. The outer cover 10 has a substantially cylindrical shape and covers the rotation part 300 from above. At least a part of a side surface of the outer cover 10 has a wavelength window 11 implemented using a wavelength selection member. The wavelength selection member is a material that transmits light of a predetermined wavelength (frequency) component used for distance measurement and that blocks light of a wavelength (frequency) component in a visible region. The wavelength selection member has a function of blocking ambient light such as natural light or electric light.

For convenience of description, as illustrated in FIG. 1, an axis perpendicular to the upper surface (or bottom surface) of the fixed part 100 is defined as a Z axis. An axis perpendicular to the Z axis is defined as an X axis. An axis perpendicular to the Z axis and the X axis is defined as a Y axis. For convenience of description, a positive direction of the Z axis may be referred to as "upper", a negative direction of the Z axis may be referred to as "lower", and a direction away from the Z axis in an X axis direction or a Y axis direction may be referred to as "lateral". Expressions related to these directions are used for convenience of description, and are not intended to limit a posture of the structure in actual use. For example, the distance measurement device 1 illustrated in FIG. 1 may be used upside down. The A-A cross-sectional view illustrated in FIG. 2 corresponds to a cross-sectional view of a YZ plane.

The bottom surface of the fixed part 100 may be fixedly provided on a predetermined plane (for example, floor surface or housing surface of predetermined device).

The rotation part 300 rotates about a center axis in a height direction (Z axis) of the cylinder as the rotation axis C. With the rotation of the rotation part 300, an optical axis of projection light (hereinafter referred to as projection light 3A) projected from a part of the side surface of the rotation part 300 in a lateral direction rotates about the rotation axis C. Along with this, the projection light 3A and an area in which distance measurement may be performed with the projection light 3A (hereinafter, referred to as distance measurement area) also rotate. As will be described later, the distance measurement device 1 measures a distance to an object present in the distance measurement area based on a time of flight (TOF) between a timing at which the projection light 3A is projected and a timing at which the projection light 3A is received as light reflected by an object in the distance measurement area (hereinafter referred to as reflection light 3B). The rotation part 300 makes one round around the rotation axis C, so that the distance measurement device 1 can measure the distance to the object present in the distance measurement area of 360 degrees around the lateral direction.

The fixed part 100 includes a board 101, a light emitting element 102, a light receiving element 103, a focus lens 104, a collimator lens 105, a coil 106, and a photointerrupter 107. The rotation part 300 includes a rotation member 301, a magnet 302, and a reflecting mirror 303.

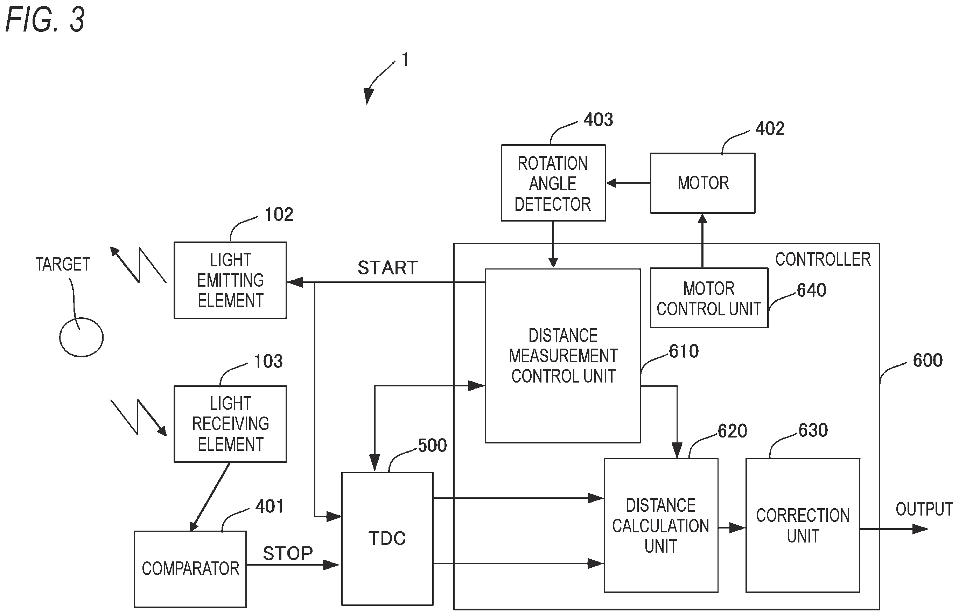

A motor 402 that is hollow (see FIG. 3) is formed by the coil 106 of the fixed part 100 and the magnet 302 of the rotation part 300, and the rotation part 300 rotates about the rotation axis C by being driven by the motor 402.

The board 101 is, for example, a printed circuit board (PCB). A comparator 401, a TDC 500, and a controller 600 (see FIG. 3), which will be described later, are mounted on the board 101. TDC is an abbreviation for Time to Digital Converter.

The light emitting element 102 is disposed along the rotation axis C and projects the projection light 3A upward.

The collimator lens 105 corrects the projection light 3A received from the light emitting element 102 to substantially parallel light and outputs the substantially parallel light upward.

The reflecting mirror 303 is provided in the rotation member 301 to reflect, in the lateral direction (direction along XY plane), the parallel light projected upward from the light emitting element 102 and corrected by the collimator lens 105. Since the reflecting mirror 303 rotates together with the rotation member 301, the projection light is projected (scanned) at 360 degrees around the rotation axis C in a direction orthogonal to the rotation axis C (lateral direction) with the elapse of time. The projection light 3A reflected by the reflecting mirror 303 passes through the wavelength window 11 of the outer cover 10 and is projected to the distance measurement area.

The reflection light 3B obtained by the projection light 3A being reflected by the object passes through the wavelength window 11 of the outer cover 10 and is reflected downward by the reflecting mirror 303.

The focus lens 104 focuses the reflection light 3B reflected downward by the reflecting mirror 303 and outputs the reflection light 3B downward.

The light receiving element 103 receives the reflection light 3B focused by the focus lens 104.

The rotation member 301 includes a plurality of ribs 311 at constant intervals. For example, the rotation member is annular, and the ribs are present at constant intervals in a circumferential direction. The photointerrupter 107 is disposed to be able to detect passage of one rib 311. By detecting and counting the passage of one rib 311 using the photointerrupter 107, the controller 600 described later can detect a rotation angle (rotation position) of the rotation member 301 (that is, rotation part 300). Therefore, the photointerrupter 107 and the ribs 311 can constitute a rotation angle detector 403 (see FIG. 3) described later.

A part of the projection light 3A projected by the light emitting element 102 and reflected by the reflecting mirror 303 and unintended light stay inside the distance measurement device 1 without passing through the wavelength window 11. The light remaining inside may be received by the light receiving element 103 as stray light 3C. The stray light 3C received by the light receiving element 103 may be superimposed on a light reception signal. In addition, when light is projected by the light emitting element 102, a large current instantaneously flows, and thus for example, noise 3D due to electromagnetic induction may be generated. The induction noise 3D includes, for example, electrical or magnetic noise. The noise 3D may also be superimposed on the light reception signal.

### <Physical Configuration of Distance Measurement Device>

FIG. 3 is a block diagram illustrating a functional configuration example of the distance measurement device 1 according to the first embodiment.

The distance measurement device 1 includes the light emitting element 102, the light receiving element 103, the comparator 401, the TDC 500, the motor 402, the rotation angle detector 403, and the controller 600. The controller 600 functions as a distance measurement control unit 610, a distance calculation unit 620, a correction unit 630, and a motor control unit 640. At least one of the comparator 401 and the TDC 500 may be included in the controller 600, or at least one of the distance measurement control unit 610, the distance calculation unit 620, the correction unit 630, and the motor control unit 640 may be outside the controller 600.

The light emitting element 102 includes, for example, a laser diode. The light emitting element 102 receives, from the distance measurement control unit 610, a pulse signal instructing light emission by the light emitting element 102. The light emitting element 102 projects the projection light 3A of a pulse wave corresponding to the received pulse signal (also referred to as input pulse signal). In FIG. 3, the input of the input pulse signal is expressed as START (START signal).

The light receiving element 103 includes, for example, a photodiode. The light receiving element 103 receives the reflection light 3B and outputs a light reception signal corresponding to a light reception level.

The comparator 401 receives the light reception signal from the light receiving element 103. The comparator 401 outputs a pulse signal in accordance with the signal level of the light reception signal (also referred to as light reception pulse signal). The light reception pulse signal is at a predetermined High level during a period in which the level of the light reception signal is equal to or higher than a predetermined comparator threshold (comparator slice level), and is at a predetermined GND level during a period in which the level of the light reception signal is lower than the comparator threshold. The High level is larger than the GND level. In FIG. 3, the output of the light reception pulse signal is expressed as STOP (STOP signal).

The motor 402 applies a drive force for rotating the rotation part 300 to the rotation part 300. The rotation angle detector 403 detects the rotation angle of the rotation part 300. The rotation angle indicates an angle with respect to a predetermined reference angle.

The TDC 500 receives the START signal from the distance measurement control unit 610. An input timing of the START signal corresponds to the light projection timing of the projection light 3A by the light emitting element 102. The TDC 500 receives the STOP signal from the comparator 401. An input timing of the STOP signal corresponds to the light reception timing of the reflection light 3B by the light receiving element 103, and specifically corresponds to a timing at which the light reception pulse signal is generated. The TDC 500 outputs information on time of flight of light (TOF) based on the START signal and the STOP signal. The TDC 500 may output information on a pulse width of the light reception signal.

The controller 600 may include a micro processing unit (MPU), a central processing unit (CPU), a digital signal processor (DSP), and the like. The controller 600 may be implemented by various integrated circuits (for example, large scale integration (LSI) or field programmable gate array (FPGA)). The controller 600 implements various functions by executing a program stored in a memory disposed inside or outside the controller 600. The controller 600 includes the distance measurement control unit 610, the distance calculation unit 620, the correction unit 630, and the motor control unit 640, as various functional units.

The distance measurement control unit 610 controls distance measurement by the distance measurement device 1, and controls, for example, the TDC 500 and the distance calculation unit 620. The distance measurement control unit 610 acquires information on the rotation angle from the rotation angle detector 403. When the acquired rotation angle is a predetermined rotation angle or is included in a predetermined angle range, the distance measurement control unit 610 transmits the START signal to the light emitting element 102 and the TDC 500. Accordingly, the light emitting element 102 can project the projection light 3A in a desired direction or a range in a desired direction around the distance measurement device 1.

The distance calculation unit 620 acquires information on TOF and pulse width from the TDC 500. For example, the distance calculation unit 620 calculates a distance from the distance measurement device 1 to an object by converting TOF into a distance based on the acquired TOF and a speed of light. The distance is a distance value measured in accordance with TOF, and is also referred to as a measurement distance value.

The correction unit 630 acquires information on a measurement distance value X from the distance calculation unit 620, and derives (for example, calculates) a distance value obtained by correcting the measurement distance value X (also referred to as corrected distance value Y). The correction unit 630 outputs information on the corrected distance value Y to an external device or a storage device. Details of a method of correcting the measured distance value X by the correction unit 630 will be described later.

The distance calculation unit 620 may specify a two-dimensional position of an object based on the measurement distance value X and the obtained rotation angle. The correction unit 630 may correct the measurement distance value X in the two-dimensional position and specify the two-dimensional position based on the corrected distance value Y and the rotation angle, thereby correcting the two-dimensional position. The correction unit 630 may output information on the corrected two-dimensional position to an external device or a storage device.

The motor control unit 640 outputs, to the motor 402, a motor control signal for controlling the motor 402.

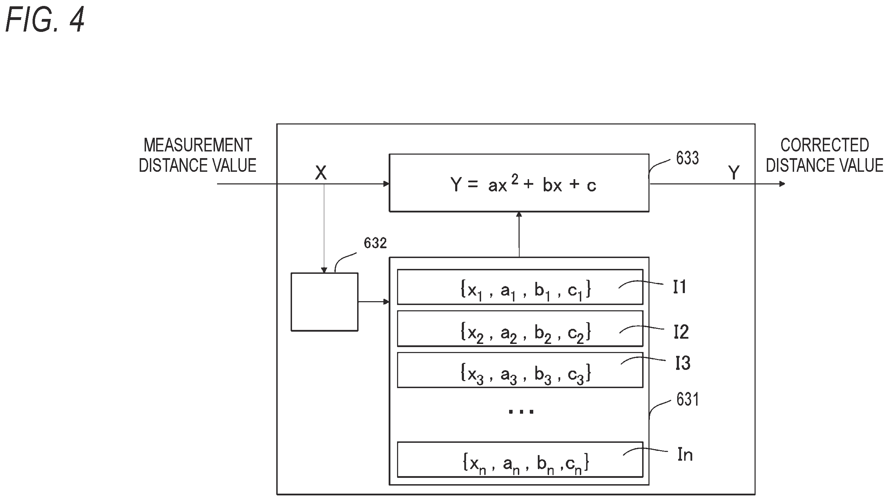

FIG. 4 is a diagram illustrating a detailed configuration example of the correction unit 630.

The correction unit 630 includes a memory 631, a memory selector 632, and a calculator 633. The memory 631 includes, for example, a RAM and a ROM, and may include another storage device. The memory 631 stores association information in which measurement distance values X are associated corresponding corrected distance values Y. The memory 631 may store a plurality of pieces of association information. As will be described later, the association information is also information in which pre-measurement distance values and a plurality of actual distance values respectively corresponding to the plurality of measurement distance values are measured in advance and associated with one another. The association information is indicated by, for example, polynomial information that is information on a polynomial. In the present embodiment, an example in which the association information is polynomial information will be mainly described.

The polynomial has, for example, a plurality of coefficients. For example, in a case where the polynomial is expressed by a quadratic equation, when the measurement distance value is defined as "X" and the corrected distance value is defined as "Y", Y = aX² + bX + c. The polynomial information stored in the memory 631 includes at least a set of values for x, a, b, and c. Here, "x" is a boundary value described later, and "a", "b", and "c" are coefficients of the polynomial. In a case where the set of x, a, b, and c is described in the form of {x, a, b, c}, when x = x₁, a = a₁, b = b₁, and c = c₁ as an example, the set is expressed as {x₁, a₁, b₁, c₁}. In FIG. 4, as an example, the memory 631 stores polynomial information of {x₁, a₁, b₁, c₁} (also referred to as polynomial information I1), {x₂, a₂, b₂, c₂} (also referred to as polynomial information I2), {x₁, a₁, b₁, c₁} (also referred to as polynomial information I3), ..., and {xₙ, aₙ, bₙ, cₙ} (also referred to as polynomial information In). The polynomial information may include not only information on the coefficients in the polynomial but also the expression itself (for example, Y = a₁X² + b₁X + c₁) in which the coefficients in the polynomial are specifically set.

The memory selector 632 selects, from the memory 631, polynomial information corresponding to the measurement distance value X input to the correction unit 630, and determines, based on the polynomial information, a polynomial to be used for calculation by the calculator 633. When there are a plurality of polynomials in the memory 631, the memory selector 632 selects polynomial information corresponding to the measurement distance value X input to the correction unit 630 from the plurality of pieces of polynomial information stored in the memory 631, and determines a polynomial to be used for the calculation by the calculator 633.

The calculator 633 sets a polynomial corresponding to the polynomial information selected by the memory selector 632 as a polynomial to be used for correction. Therefore, for example, when the polynomial information I2 is selected, Y = a₂X² + b₂X + c₂ is set as the polynomial Y = aX² + bX + c. The calculator 633 corrects the measurement distance value X based on the set polynomial, and obtains the corrected distance value Y. In addition, when distance measurement is performed on a plurality of objects around the distance measurement device 1, the memory selector 632 selects polynomial information from the memory 631 a plurality of times based on the obtained measurement distance value X, acquires the polynomial information from the memory 631, switches the polynomial information, and sets the polynomial information in the calculator 633.

Next, specific procedures of the correction will be described.

In order to generate polynomial information stored in the memory 631, the following processing is performed in advance. For example, the distance measurement device 1 derives a plurality of measurement distance values by measuring a distance to an object as a measurement target according to the TOF method by the distance measurement device 1 as described above while changing the distance from the distance measurement device 1 to the object. The measurement distance value is a measurement distance value measured in advance, and thus is also referred to as a pre-measurement distance value. The distance measurement device 1 acquires information in which an actual distance to an object is measured by a method other than the TOF method. For example, the actual distance is measured by a measurer actually measuring the distance from the distance measurement device 1 to the object with a measure or another sensor. Information on the measured actual distance is input to the distance measurement device 1 by, for example, a communication device or an input device (for example, key or button) of the distance measurement device 1.

The controller 600 maps, on a two-dimensional plane, each pre-measurement distance value from the distance measurement device 1 to the object measured in advance and each actual distance value to the same object at the same position measured in advance.

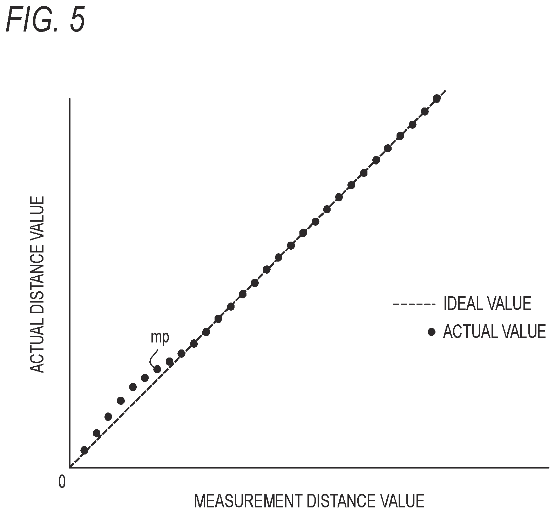

FIG. 5 is a diagram illustrating an arrangement example of mapping points based on pre-measurement distance values and actual distance values on a two-dimensional plane. In the two-dimensional plane of FIG. 5, a horizontal axis represents the pre-measurement distance value, and a vertical axis represents the actual distance value. The mapping point is an example of a corresponding point determined by the pre-measurement distance values measured in advance and a plurality of actual distance values corresponding to respective premeasured distance values.

In the two-dimensional plane, one mapping point mp is arranged for the pre-measurement distance value and the actual distance to the same object at the same position. Ideally, the pre-measurement distance value and the actual distance value to the same object at the same position should be the same value. Therefore, an ideal value of a set of mapping points mp indicating the relation between the pre-measurement distance values and the actual distance values is a straight line passing through an origin of the two-dimensional plane (two-dimensional coordinates). On the other hand, actually, the pre-measurement distance value may include a measurement error. Therefore, some of the mapping points mp are not arranged on the straight line indicating the ideal value. Such an error is more likely to occur as the pre-measurement distance value is smaller, that is, as the distance from the distance measurement device 1 is shorter in a short-distance region.

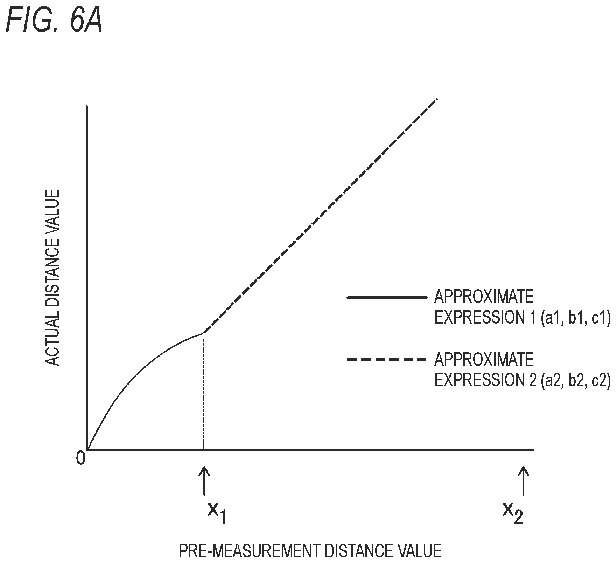

FIG. 6A is a diagram illustrating a first example of an approximate expression approximated to pass through each mapping point on a two-dimensional plane.

The correction unit 630 generates an approximate expression approximated to pass through each mapping point mp on the two-dimensional plane. The approximate expression is represented by, for example, a polynomial. The approximate expression approximated to pass through each mapping point mp may be represented by a plurality of approximate expressions. For example, in FIG. 6A, a feature of a shape formed by the set of mapping points mp is greatly different between a range in which the pre-measurement distance value is equal to or smaller than x1 and a range in which the pre-measurement distance value is larger than x1. Specifically, in a range in which the pre-measurement distance value is equal to or smaller than x1 (that is, side closer to distance measurement device 1), the set of mapping points mp is a quadratic curve, and in a range in which the pre-measurement distance value is larger than x1 (that is, side farther from distance measurement device 1), the set of mapping points mp is linear. The correction unit 630 may determine the value of x1 by, for example, an administrator inputting the value of x1 via an input device, or may determine the value of x1 by calculation based on the position of the mapping point mp or the positional relation between the positions of the mapping points mp. In such a case, the measurement error included in the measurement distance value can be efficiently reduced by using different approximate expressions for the correction in the range in which the pre-measurement distance value is equal to or smaller than x1 and the range in which the pre-measurement distance value is larger than x1. A point serving as a boundary for changing an approximate expression such as x1 is also referred to as a boundary value.

In FIG. 6A, in the vicinity of the maximum value of the pre-measurement distance values, the mapping point mp forms a predetermined shape in a range equal to or smaller than the maximum value, and the mapping point mp itself does not exist in a range exceeding the maximum value. Therefore, the correction unit 630 also sets the maximum value of the pre-measurement distance values as the boundary value. The number of boundary values may be three or more. The correction unit 630 generates the same number of approximate expressions as the number of boundary values. For example, in the case of FIG. 6A, the correction unit 630 generates an approximate expression 1 for 0 < pre-measurement distance value ≤ x₁, and generates an approximate expression 2 for x₁ < pre-measurement distance value distance value ≤ x₂. The approximate expression 1 is expressed by a quadratic expression (ax² + bx + c) as in FIG. 4, and specific coefficients of "a", "b", and "c" are expressed in the form of (a₁, b₁, c₁). Similarly, in the approximate expression 2, specific coefficients of "a", "b", and "c" are expressed in the form of (a₂, b₂, c₂). For example, the correction unit 630 calculates each approximate expression by a known linear approximation or nonlinear approximation method in accordance with the position of each mapping point mp included in the range of the pre-measurement distance value. For example, the correction unit 630 obtains an approximate curve by performing curve fitting. The generated polynomial information on the polynomial indicating each approximate expression is stored in the memory 631. The polynomial information is stored in the form of, for example, the set {x, a, b, c} of the boundary value as illustrated in FIG. 4 and the coefficients of the polynomial.

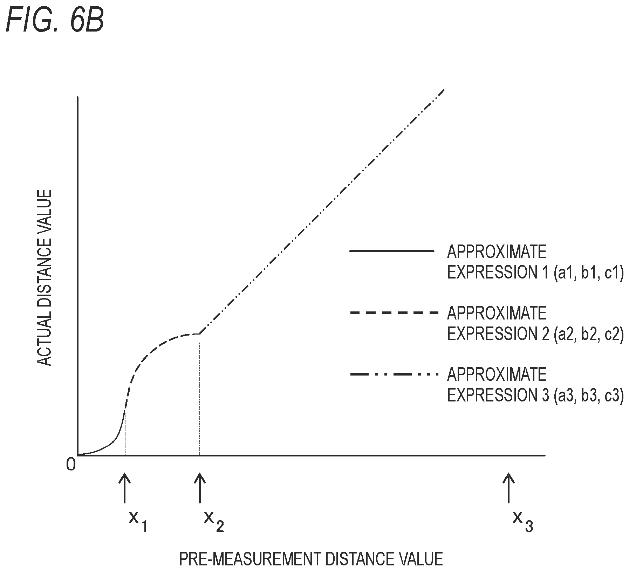

FIG. 6B is a diagram illustrating a second example of an approximate expression approximated to pass through each mapping point on a two-dimensional plane. In FIG. 6B, differences from FIG. 6A will be mainly described.

In FIG. 6B, the method of generating an approximate expression is the same as in FIG. 6A, but there are three boundary values x₁, x₂, and x₃, and there are also three approximate expressions. The correction unit 630 generates the approximate expression 1 for 0 < pre-measurement distance value ≤ x₁, the approximate expression 2 for x₁ < pre-measurement distance value ≤ x₂, and the approximate expression 3 for x₂ < pre-measurement distance value ≤ x₃. Similarly, in the approximate expression 3, specific coefficients of "a", "b", and "c" are expressed in the form of (a₃, b₃, c₃). The approximate expression 3 has a linear shape as illustrated in FIG. 6B, and thus can be expressed by a linear expression, and the value of the coefficient a₃ is 0.

A light amount of the reflection light 3B changes according to a reflectance of the object, a signal level of the light reception signal also changes, and a generation timing of the STOP signal may change. In addition, since the pulse width of the light reception pulse signal changes according to the light amount of the reflection light 4B, the generation timing of the STOP signal may change. Therefore, the correction unit 630 may generate the approximate expression and the polynomial information for each object, for example, in consideration of the reflectance of the object to be measured. The light amount (light intensity) of the projection light 3A by the light emitting element 102 may be constant.

In this way, the correction unit 630 may determine a plurality of distance regions in which each pre-measurement distance value is divided by each boundary value and generate an approximate expression for each distance region, or may store polynomial information corresponding to the approximate expression in the memory 631 for each distance region.

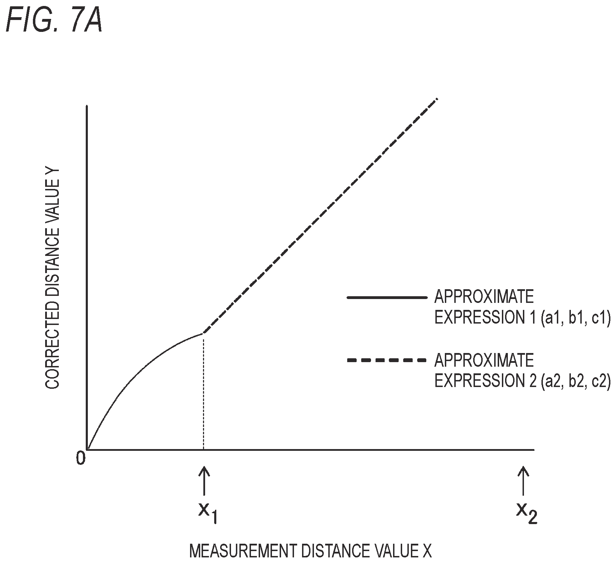

FIG. 7A is a diagram illustrating a first example of a relation between the measurement distance value X and the corrected distance value Y.

The correction unit 630 selects an approximate expression to be used for correction based on the measurement distance value X, and corrects the measurement distance value X using the selected approximate expression to obtain the corrected distance value Y. For example, the correction unit 630 selects the approximate expression 1 when 0 < X ≤ x₁ is satisfied, and derives (for example, calculates) the corrected distance value Y from the measurement distance value X based on the approximate expression 1. For example, the correction unit 630 selects the approximate expression 2 when x₁ < X ≤ x₂ is satisfied, and derives (for example, calculates) the corrected distance value Y from the measurement distance value X based on the approximate expression 2.

Specifically, the correction unit 630 stores the set {x, a, b, c} of the boundary value as illustrated in FIG. 4 and the coefficients of the polynomial in the memory 631. When 0 < X ≤ x₁ is satisfied, the memory selector 632 selects the polynomial information I1 that is {x₁, a₁, b₁, c₁} corresponding to the approximate expression 1. The calculator 633 calculates the corrected distance value Y based on the measurement distance value X according to the approximate expression 1 indicated by the polynomial information I1. Similarly, when x₁ < X ≤ x₂ is satisfied, the memory selector 632 selects the polynomial information I2 that is {x₂, a₂, b₂, c₂} corresponding to the approximate expression 2. The calculator 633 calculates the corrected distance value Y based on the measurement distance value X according to the approximate expression 2 indicated by the polynomial information I2. That is, when the measurement distance value X is equal to any of the boundary values x, the memory selector 632 selects polynomial information including the boundary value x. When the measurement distance value X is different from all the boundary values x, the memory selector 632 selects, for example, polynomial information including the boundary value x larger than the measurement distance value X and closest to the measurement distance value X. When the measurement distance value X is different from all the boundary values x, the memory selector 632 may select polynomial information including the boundary value x smaller than the measurement distance value X and closest to the measurement distance value X.

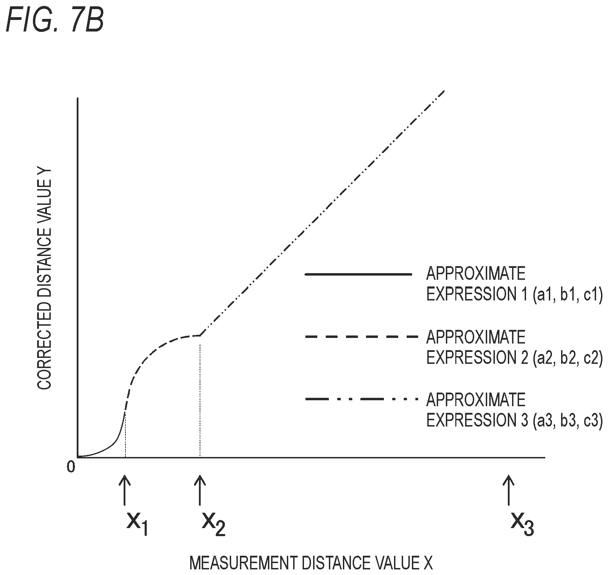

FIG. 7B is a diagram illustrating a second example of the relation between the measurement distance value X and the corrected distance value Y. In FIG. 7B, differences from FIG. 7A will be mainly described.

The correction unit 630 selects the approximate expression 3 when x₂ < X ≤ x₃ is satisfied, and derives (for example, calculates) the corrected distance value Y from the measurement distance value X based on the approximate expression 3. Specifically, in the correction unit 630, when x₂ < X ≤ x₃ is satisfied, the memory selector 632 selects the polynomial information I3 that is {x₃, a₃, b₃, c₃} corresponding to the approximate expression 3. The calculator 633 calculates the corrected distance value Y based on the measurement distance value X according to the approximate expression 2 indicated by the polynomial information I2.

In this way, the correction unit 630 can select one piece of polynomial information from the polynomial information stored for each distance region based on the input measurement distance value X, and derive the corrected distance value Y based on the measurement distance value X according to the polynomial (approximate expression) indicated by the polynomial information.

The approximate expression or the polynomial may be expressed by an n-order expression (n is integer of 3 or more) instead of a quadratic expression. In this case, the number of coefficients of the n-order expression is larger than that of the quadratic expression.

Next, the distance region of the measurement distance value X corrected by the correction unit 630 will be described.

The correction unit 630 corrects the measurement distance value X at least when the measurement distance value X is included in the short-distance region, specifically, when the measurement distance value X is equal to or less than a predetermined threshold. When an object to be measured is present in the short-distance region, the reflection light 3B reflected by the object is received in a relatively short time from the projection of the projection light 3A. Therefore, stray light 3C caused by light projection by the light emitting element 102 and noise 3D caused by a large current at the time of light emission are superimposed on the light reception signal, and easily affect the generation timing of the STOP signal. The predetermined threshold of the measurement distance value X may be, for example, a value near a boundary between the stray light 3C that is not originally desired to be received or the noise component and the reflected light 3B that is originally desired to be received. That is, the predetermined threshold may be, for example, the same value as the boundary value x1 or the boundary value x2, which is a relatively small boundary value. In this way, by correcting the measurement distance value X when the measurement distance value X is equal to or less than the predetermined threshold, the measurement error can be efficiently reduced.

In addition, the correction unit 630 also corrects the measurement distance value X when the measurement distance value X is included in a long-distance region, specifically, when the measurement distance value X is more than a predetermined threshold. When an object to be measured is present in the short-distance region, the reflection light 3B reflected by the object is received in a relatively long time from the projection of the projection light 3A. Even when a certain period of time elapses from the light emission timing of the light emitting element 130, the stray light 3C or noise may be present. On the other hand, the distance measurement device 1 can correct the measurement distance value X even when the measured distance value X is larger than the predetermined threshold, thereby reducing the measurement error without depending on the distance between the distance measurement device 1 and the object.

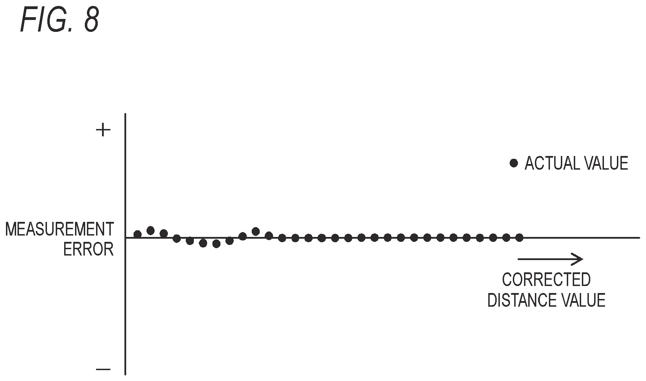

FIG. 8 is a diagram illustrating an example of a relation between the corrected distance value Y and the measurement error.

By the correction unit 630 correcting the measurement distance value X using the approximate expression (polynomial), the corrected distance value Y is a value closer to the actual distance to an object than the measurement distance value X. Therefore, the measurement error of the corrected distance value Y is close to 0 regardless of whether the corrected distance value Y is in a distance region of a small value or in a distance region of a large value as illustrated in FIG. 8. Therefore, it can be said that the measurement error can be reduced by the correction unit 630 correcting the measurement distance value X.

In this way, the distance measurement device 1 according to the present embodiment includes the correction unit 630 that stores information on an approximate expression in the form of a polynomial in advance and corrects the measurement distance value X. As an example, the correction unit 630 stores a quadratic approximation for each of the short-distance region and the long-distance region in the distance measurement region. As an example, the short-distance region is a region in a range of 0 ≤ X < x1, and in this case, the correction unit 630 sets the approximate expression 1. As an example, the long-distance region is a region in a range of x1 ≤ X < x2, and in this case, the correction unit 630 sets the approximate expression 2. Further, the distance measurement region may be divided into three or more N regions, and as an example, a N-th region may be a region in a range of Xₙ₋₁ ≤ X < Xₙ, and in this case, the correction unit 630 may set an approximate expression n. The correction unit 630 switches coefficients of an approximate expression set in accordance with the measurement distance value X, performs calculation using the approximate expression, corrects the measurement distance value X, and outputs the corrected distance value Y. Accordingly, the distance measurement device 1 can reduce an error in the measurement distance value.

In the present embodiment, the correction unit 630 executes advance preparation such as association between each pre-measurement distance value and each actual distance value, mapping to a two-dimensional plane, generation of an approximate expression, and storage of polynomial information in the memory 631, but the present invention is not limited thereto. For example, an external server may execute these advance preparations. In this case, at a timing of actually correcting the measurement distance value X, polynomial information may be acquired from an external server via a communication device or the like, and the memory 631 may at least temporarily store the polynomial information. The polynomial information may be directly set in the calculator 633 without being stored in the memory 631. Therefore, the controller 600 acquires association information in which a plurality of measurement distance values and a plurality of actual distance values corresponding to the plurality of measurement distance values are measured in advance and associated with one another from the memory 631, an external server, or the like.

Although various embodiments have been described above with reference to the drawings, it is needless to say that the present disclosure is not limited to such examples. It is apparent that those skilled in the art can conceive of various modifications or corrections within the scope described in the claims, and it is understood that such modifications or corrections naturally fall within the technical scope of the present disclosure. The components in the above embodiments may be freely combined without departing from the scope of the invention.

### <Overview of Present Embodiment>

As described above, at least the following matters are described in the present disclosure. Components corresponding to those in the above embodiment are shown in parentheses, but the present disclosure is not limited thereto.

### (Item 1)

A distance measurement device (distance measurement device 1) including:
a light emitting element (light emitting element 102) configured to project projection light (projection light 3A);
a light receiving element (light receiving element 103) configured to receive reflection light (reflection light 3B) of the projection light reflected by an object and generate a light reception signal based on the reflection light; and
a controller (controller 600) configured to perform processing based on the light reception signal, in which
the controller
derives a measurement distance value (measurement distance value X) by measuring a distance to the object based on a time from projection of the projection light until a signal level of the light reception signal is equal to or higher than a predetermined level,
acquires association information in which a plurality of measurement distance values (pre-measurement distance values) and a plurality of actual distance values corresponding to the plurality of measurement distance values are associated with one another, and
corrects the derived measurement distance value based on the association information when the derived measurement distance value is equal to or lower than a predetermined threshold.

The reflection light may be superimposed with stray light (stray light 3C) and received by the light receiving element. When light is projected by the light emitting element, electrical or magnetic noise (noise 3D) may be generated due to a large current or the like. Therefore, the measurement distance value may include a measurement error caused by stray light or noise. The measurement error is likely to be included when the measurement distance value is equal to or less than a predetermined threshold, that is, when an object is present at a short distance from the distance measurement device. Even in this case, the distance measurement device corrects the measurement distance value of an object to be measured in consideration of a relation between the measurement distance value obtained in advance and the actual distance value, thereby reducing the measurement error and performing distance measurement.

### (Item 2)

The distance measurement device according to item 1, in which
when the measurement distance value is equal to or more than the threshold, the controller corrects the derived measurement distance value based on the association information.

Accordingly, the distance measurement device can perform distance measurement while reducing a measurement error not only when an object is present at a short distance but also when an object is present at a long distance.

### (Item 3)

The distance measurement device according to item 1 or 2, in which
an approximate expression approximated to pass through a corresponding point (mapping point mp) determined by the plurality of measurement distance values measured in advance and the plurality of actual distance values is generated, and
the association information includes polynomial information related to a polynomial indicating the approximate expression.

Accordingly, the distance measurement device can easily correct the measurement distance value of the object to be measured by calculation using the polynomial, and can perform distance measurement while reducing the measurement error.

### (Item 4)

The distance measurement device according to item 1 or 2, further including:
a memory (memory 631), in which
the plurality of measurement distance values measured in advance are divided into a plurality of distance regions, and
the association information is determined and stored in the memory for each of the distance regions.

Accordingly, the distance measurement device can correct the measurement distance value using the association information different for each distance region.

### (Item 5)

The distance measurement device according to item 4, in which
the controller acquires the association information from the memory and switches the association information based on the derived measurement distance value.

Accordingly, when measurement distance values of different measurement regions are obtained at the time of measuring a plurality of objects, the distance measurement device can correct each of the plurality of measurement distance values by switching the association information.

### (Item 6)

A distance measurement method including:
projecting projection light;
receiving reflection light of the projection light reflected by an object and generating a light reception signal based on the reflection light;
deriving a measurement distance value by measuring a distance to the object based on a time from projection of the projection light until a signal level of the light reception signal is equal to or higher than a predetermined level;
acquiring association information in which a plurality of measurement distance values and a plurality of actual distance values corresponding to the plurality of measurement distance values are associated with one another; and
correcting the derived measurement distance value based on the association information when the derived measurement distance value is equal to or lower than a predetermined threshold.

Accordingly, the distance measurement method can obtain the same effect as that of item 4.

The present disclosure is based on a Japanese Patent Application filed on November 30, 2023 (Japanese Patent Application No. 2023-202863), and the contents thereof are incorporated herein by reference.

### INDUSTRIAL APPLICABILITY

The present disclosure is useful for a distance measurement device, a distance measurement method, and the like capable of performing distance measurement while reducing an error in a distance to an object even when noise such as stray light is present.

### REFERENCE SIGNS LIST

1 DISTANCE MEASUREMENT DEVICE
3A PROJECTION LIGHT
3B REFLECTION LIGHT
3C STRAY LIGHT
3D NOISE
10 OUTER COVER
11 WAVELENGTH WINDOW
100 FIXED PART
101 BOARD
102 LIGHT EMITTING ELEMENT
103 LIGHT RECEIVING ELEMENT
104 FOCUS LENS
105 COLLIMATOR LENS
106 COIL
107 PHOTOINTERRUPTER
300 ROTATION PART
301 ROTATION MEMBER
302 MAGNET
303 REFLECTING MIRROR
311 RIB
401 COMPARATOR
402 MOTOR
403 ROTATION ANGLE DETECTOR
500 TDC
600 CONTROLLER
610 DISTANCE MEASUREMENT CONTROL UNIT
620 DISTANCE CALCULATION UNIT
630 CORRECTION UNIT
631 MEMORY
632 MEMORY SELECTOR
633 CALCULATOR
640 MOTOR CONTROL UNIT

## Claims

1. A distance measurement device comprising:
a light emitting element configured to project projection light;
a light receiving element configured to receive reflection light of the projection light reflected by an object and generate a light reception signal based on the reflection light; and
a controller configured to perform processing based on the light reception signal, wherein
the controller
derives a measurement distance value by measuring a distance to the object based on a time from projection of the projection light until a signal level of the light reception signal is equal to or higher than a predetermined level,
acquires association information in which a plurality of measurement distance values and a plurality of actual distance values corresponding to the plurality of measurement distance values are associated with one another, and
corrects the derived measurement distance value based on the association information when the derived measurement distance value is equal to or lower than a predetermined threshold.

2. The distance measurement device according to claim 1, wherein
when the derived measurement distance value is equal to or more than the threshold, the controller corrects the derived measurement distance value based on the association information.

3. The distance measurement device according to claim 1 or 2, wherein
an approximate expression approximated to pass through a corresponding point determined by the plurality of measurement distance values measured in advance and the plurality of actual distance values is generated, and
the association information includes polynomial information related to a polynomial indicating the approximate expression.

4. The distance measurement device according to claim 1 or 2, further comprising:
a memory, wherein
the plurality of measurement distance values measured in advance are divided into a plurality of distance regions, and
the association information is determined and stored in the memory for each of the distance regions.

5. The distance measurement device according to claim 4, wherein
the controller acquires the association information from the memory and switches the association information based on the derived measurement distance value.

6. A distance measurement method including:
projecting projection light;
receiving reflection light of the projection light reflected by an object and generating a light reception signal based on the reflection light;
deriving a measurement distance value by measuring a distance to the object based on a time from projection of the projection light until a signal level of the light reception signal is equal to or higher than a predetermined level;
acquiring association information in which a plurality of measurement distance values and a plurality of actual distance values corresponding to the plurality of measurement distance values are associated with one another; and
correcting the derived measurement distance value based on the association information when the derived measurement distance value is equal to or lower than a predetermined threshold.
